# EUROPEAN PATENT APPLICATION

(11) **EP 4 756 623 A1**
(43) Date of publication of application: **10.06.2026**
(21) Application number: 25217966.8
(22) Date of filing: 24.11.2025
(51) Int. Cl.: G06F 11/10

(54) **FAULT DETECTION UNIT FOR CHECKING CONFIGURATION REGISTERS AND FAULT DETECTION METHOD THEREOF**

(30) Priority: 04.12.2024 IT 202400027486
(71) Applicant: STMicroelectronics International N.V., 1228 Plan-les-Ouates, Geneva (CH)
(72) Inventor: D'ANGELO, Giuseppe, I-80030 Tufino (Napoli) (IT)
(74) Representative: Buzzi, Notaro & Antonielli d'Oulx S.p.A.

(57) **Abstract**

A fault detection circuit (10) for checking configuration registers (REG₁...REG_{N}) of a processing unit, performing a configuration register test on a given set of registers (REG₁...REG_{N}) of said processing unit, reading settings of the configuration registers (REG₁...REG_{N}) and comparing them with expected settings,
wherein said fault detection circuit (10) comprises
a set of parity calculator units (PAR_CALC₁...PAR_CALC_{N}), each parity calculator unit (PAR_CALC_{X}) configured to receive from at least a configuration register (REG_{X}) in said given set of registers (REG₁...REG_{N}) at least a subset of bits (SB_{X}) of a set of bits stored in said at least configuration register (REG_{X}) and configured to calculate a parity code (P_{X}) of said subset of bits (SB_{X}) which binary value indicates a parity of said subset of bits (SB_{X}),
a set of capture units (CAPT₁...CAPT_{N}) each configured to receive a parity code (P_{X}) output from a respective parity calculator unit (PAR_CALC_{X}) in said set of parity calculator units (PAR_CALC₁...PAR_CALC_{N}) and to hold it on its output as captured parity code (PC_{X}) under the control of a capture control signal (TRIG_CAPT).
a controller module (RCC) configured to, for each parity calculation unit (PAR_CALC_{X}) and respective capture unit (CAPT_{X}),
issue a parity calculation control signal (TRIG_CALC) enabling the calculation of the parity code (P_{X}) by the corresponding parity calculation unit (PAR_CALC_X) at a given time,
issue said capture control signal (TRIG_CAPT) to enable holding of the parity code value (P_{X}) as captured parity code (PC_{X}) ,
receive said captured parity code (PC_{X}) and compare it with a captured parity code (PC_{X}) received at a previous time and
signal (ERR) a fault if the comparison indicates a change in the value of the captured parity code (PC_{X}), storing an index (X) identifying the register (REG_{X}) which comparison indicates a change in the value of the captured parity code (PC_{X}).

## Description

### Technical field

The description relates to a fault detection circuit for checking configuration registers of a processing unit, performing a configuration register test on a given set of registers of said processing unit, reading settings of the configuration registers and comparing them with expected settings.

One or more embodiments may be applied to a processing unit, in particular microcontroller unit, used in the automotive field.

### Technological background

In the fault detection in electronic circuits and arrangements, different type of faults are sought, such as transient or permanent faults, single point faults, i.e., faults in an element that are not covered by a safety mechanism and that lead directly to the violation of a safety goal, latent fault, i.e. multiple-point faults whose presence is not detected by a safety mechanism nor perceived by the driver within the multiple-point fault detection interval. Thus, multiple-point faults are individual fault that, in combination with other independent faults, lead to a multiple-point failure. These and other definition faults may be found in the ISO26262 standard.

In automotive applications, detecting the fault conditions of the electronic systems and applying the countermeasures to protect them is becoming mandatory. Functional safety is part of the overall safety of a system. Today the automotive microcontrollers have to offer a set of hardware and/or software features to support applications that need to fulfil functional safety requirements of the requested automotive safety integrity level as defined by the ISO26262 standard.

Diagnosis of control electronics includes detecting as early as possible the failures affecting the microcontroller configuration registers, hardware-related (stuck values or soft errors induced bit flips) or software-related (incorrect value stored or register corrupted by software error). A Configuration Register Test is a safety mechanism used in the automotive industry and mentioned in the ISO26262 standard (see ISO 26262-5:2018 Table D.4 - Processing units, Safety mechanism D.2.3.7 Configuration register test) to detect failures of the microcontroller with a typically high diagnostic coverage. The safety mechanism can be implemented by software or by hardware and provides calculating the CRC (Cyclic Redundancy Check) of the values of all safety-relevant configuration registers and then comparing the calculated CRC value to the expected one. Such mechanism runs once per FTTI (Fault Tolerant Time Interval), typical value for FTTI is in the range between 1 ms and 50 ms.

A known hardware safety mechanism is based on triple-voted hardware. The drawbacks of the software safety mechanism are in the first place the computational load, then the required hardware resources supporting the software, typically two memory location for each protected register, and finally, this known mechanism does not identify the fault-affected configuration register. The drawback of the hardware safety mechanism is the hardware overhead implementing the safety mechanism.

### Object and summary

An object of one or more embodiments is to contribute in dealing with a number of issues which are recognized to exist in a context as discussed in the foregoing.

According to one or more embodiments that object may be achieved by means of a fault detection circuit having the features set forth in the claims that follow.

One or more embodiments may relate to a corresponding method for fault detection.

As mentioned previously, various embodiments of the present disclosure regard a fault detection circuit for checking configuration registers of a processing unit, performing a configuration register test on a given set of registers of said processing unit, reading settings of the configuration registers and comparing them with expected settings,
wherein said fault detection circuit comprises
a set of parity calculator units, each parity calculator unit configured to receive from at least a configuration register in said given set of registers at least a subset of bits of a set of bits stored in said at least configuration register and configured to calculate a parity code of said subset of bits which binary value indicates a parity of said subset of bits,
a controller module configured to, for each parity calculation unit
issue a parity calculation control signal enabling the calculation of the parity code by the corresponding parity calculation unit at a given time,
issue a capture control signal to enable receive said parity code and compare it with a parity code received at a previous time and
signal a fault if the comparison indicates a change in the value of the parity code, storing an index identifying the register which comparison indicates a change in the value of the captured parity code.

In variant embodiments, said fault detection circuit comprises
a set of parity calculator units, each parity calculator unit configured to receive from at least a configuration register in said given set of registers at least a subset of bits of a set of bits stored in said at least configuration register and configured to calculate a parity code of said subset of bits which binary value indicates a parity of said subset of bits,
a set of capture units each configured to receive a parity code output from a respective parity calculator unit in said set of parity calculator units and to hold it on its output as captured parity code under the control of a capture control signal.
a controller module configured to, for each parity calculation unit and respective capture unit,
issue a parity calculation control signal enabling the calculation of the parity code by the corresponding parity calculation unit at a given time,
issue said capture control signal to enable holding of the parity code value as captured parity code,
receive said captured parity code and compare it with a captured parity code received at a previous time and
signal a fault if the comparison indicates a change in the value of the captured parity code, storing an index identifying the register which comparison indicates a change in the value of the captured parity code.

In variant embodiments, said subset of bits is a set of safety relevant bits.

In variant embodiments, said configuration register test is a configuration register test according to ISO26262.

In variant embodiments, said parity calculator unit receives subsets of bits from more than one configuration register.

In variant embodiments, said parity calculator unit comprises a PISO Shift Register configured to serialize said subset of bits to calculated the XOR of said subset of bits serialized.

In variant embodiments, said controller is configured to issue said capture control signal upon completion of said calculation of a parity code by all said parity calculator units, said controller comprising in particular a timer to issue said parity calculation control signal and capture control signal, in particular programmable.

In variant embodiments, said parity calculator unit is configured to be reset by the parity calculation control signal when it is asserted and then to start computing the parity code.

The solution described herein also refers to a fault detection method comprising checking configuration registers of a processing unit, performing a configuration register test on a given set of registers of said processing unit, reading settings of the configuration registers and comparing them with expected settings,
comprising performing a parity calculation, on at least a subset of bits of a set of bits stored in at least configuration register calculating a parity code of said subset of bits which binary value indicates a parity of said subset of bits,
holding said parity code as captured parity code under the control of a capture control signal.
for each parity calculation unit and respective capture unit,
issuing a parity calculation control signal enabling the calculation of the parity code by the corresponding parity calculation unit at a given time,
issuing said capture control signal to enable holding of the parity code value as captured parity code, receiving said captured parity code and compare it with a captured parity code received at a previous time and
signalling a fault if the comparison indicates a change in the value of the captured parity code, storing an index identifying the register which comparison indicates a change in the value of the captured parity code.

In variant embodiments, said method comprises issuing said capture control signal upon completion of said calculation of a parity code by all said parity calculator units, said controller comprising in particular a timer to issue said parity calculation control signal and capture control signal, in particular programmable.

In variant embodiments, said method comprises resetting said parity calculator unit by the parity calculation control signal when it is asserted and then start computing the parity code.

The claims are an integral part of the technical disclosure of the embodiments as provided herein.

### Brief description of the several views in the drawings

One or more embodiments will now be described, by way of example only, with reference to the annexed figures, wherein:
- Figure 1 is a schematic block diagram of a fault detection circuit according to embodiments,
- Figure 2 is a logic diagram of a module of the fault detection circuit according to embodiments;
- Figure 3 is a logic diagram of another embodiment of the module of the fault detection circuit according to embodiments.

### Detailed description

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment. Moreover, particular conformations, structures, or characteristics may be combined in any adequate way in one or more embodiments.

The references used herein are provided merely for convenience and hence do not define the extent of protection or the scope of the embodiments.

The proposed solution consists of a system architecture providing hardware support for detecting a fault affecting one of the safety-relevant configuration registers with a delay of a few clock cycles, reduced hardware resources and allowing the identification of the affected configuration register.

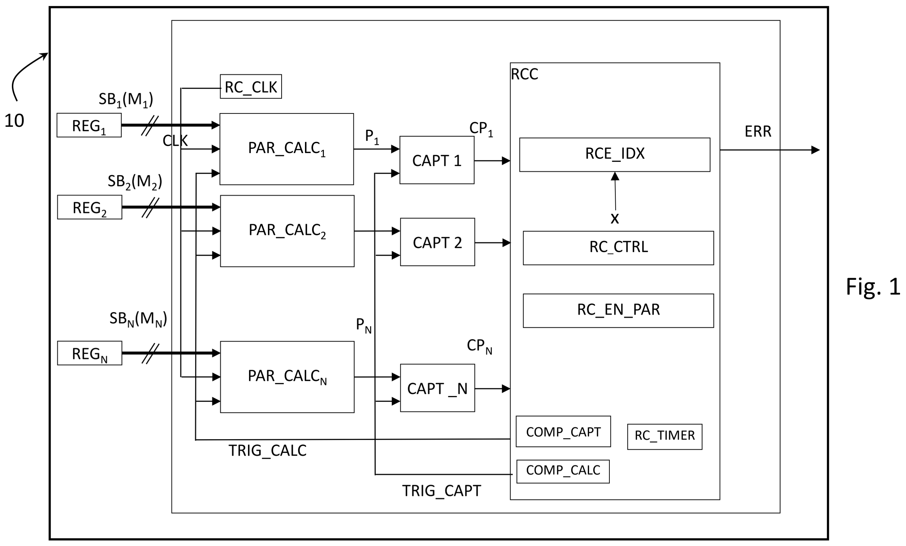

Figure 1 shows a functional scheme of the proposed system RCU (Register Checker Unit).

A set of N safety relevant registers REG₁...REG_{N} among the configuration registers of a microcontroller supplies a subset SB₁...SB_{N} of its register content, which corresponds in particular to the safety relevant bits in the registers, i.e., a binary string of a length of a respective number M₁...M_{N} of bits, to a fault detection unit embodied by a register checker unit 10, specifically to a respective parity calculator PAR_CALC₁...PAR_CALC_{N} in said register checker unit 10 calculating a respective parity code P₁...P_{N} of such respective string SB₁...SB_{N}, which is fed to a respective capture module CAPT₁...CAPT_{N}, which is then configured to output a captured parity code CP₁...CP_{N}.

For safety relevant register or component are intended registers or component which by an error can cause faults, e.g. single point and multiple point faults, which may cause failures. Safety relevant bits are the bits in such registers on which an error can cause the error of the registers as defined above. In general the safety relevant registers and bits are selected based on the fault or faults one wish to detect, e.g. the failure modes identified by the FMEDA (Failure Modes, Effects, and Diagnostic coverage Analysis).

A clock signal CLK from a RCU clock generator RC_CLK is fed to each parity calculator PAR_CALC₁...PAR_CALC_{N} to clock their operation.

For each safety-relevant register REGₓ (with x = 0, 1, ..., N), the relevant parity calculator PAR_CALCₓ and capture module CAPTₓ can be enabled/disabled by a register RC_EN_PAR in a RCU controller module RCC comprised in said register checker unit 10.

Each parity calculator PAR _CALCₓ thus receives in input in the exemplary embodiment a respective subset SB_{X} of the safety-relevant register REGₓ. The subset SB_{X} can coincide with the entire content of register REGₓ or contain less bits, in particular depending on how much safety relevant bits are stored in register REGₓ. Thus, the subset SB_{X} is represented by a number Mₓ of bits, i.e., Mₓ may be the number of safety-relevant bits inside the register REGₓ. Such parity calculator PAR_CALₓ of each safety-relevant register REGₓ is configured to calculate a parity code P_{X} of the respective subset SB_{X}, in particular the relevant 1-bit parity code indicating if the total number of logical ones in the content of Mₓ bits is odd or even. In embodiment, the number Mₓ of safety relevant bits can be less than the total number of bits of the register REGₓ and each parity calculator PAR_CALₓ can cover more than one registers in case the number of bits of this register to cover is less than its standard size.

The Register Checker Unit 10 or RCU 10 comprises a RCU controller module RCC which includes a calculation register COMP_CALC and a capture register COMP_CAPT configured respectively to output a calculation trigger signal TRIG_CALC and a capture trigger signal TRIG_CAPT. Such calculation trigger signal TRIG_CALC and capture trigger signal TRIG_CAPT can be a pulse signal with a detectable duration, e.g., 1 or 2 clock cycles, or a level signal with the parity calculator PAR_CALₓ, which receives the calculation trigger signal TRIG_CALC, and capture module CAPTₓ, which receives the capture trigger signal TRIG_CAPT, reacting on the change of the logic level of such signals.

Thus, the RCU controller module RCC is configured to send the calculation trigger signal TRIG_CALC to reset and start the calculation by each parity calculator PAR_CALₓ of the relevant 1-bit parity code Pₓ and each parity calculator PAR_CALₓ holds on output the calculated 1-bit parity code Pₓ until the RCU controller module RCC sends the next calculation trigger signal TRIG_CALC. In particular, thus the next calculation trigger signal TRIG_CALC is issued after the issuance of the capture trigger signal TRIG_CAPT, in particular with a delay sufficient for the completion by the parity calculators PAR _CALC₁...PAR_CALC_{N} to calculate the respective parity codes.

The RCU controller module RCC is then configured to send, as said after a time delay the capture trigger signal TRIG_CAPT to start the capture by the capture module CAPTₓ and each capture module CAPTₓ is configured to hold on its output the parity code Pₓ, i.e., calculated 1-bit parity code Pₓ, until the RCU controller module RCC sends the next capture trigger signal TRIG_ CAPT.

The RCU controller module RCC is configured to generate the calculation trigger signal TRIG_CALC and capture trigger signal TRIG_CAPT using an internal timer RC_TIMER with programmable compare functions by the calculation register COMP_CALC and capture register COMP_CAPT, i.e., the value in such registers determine the time instant (or counter value) at which the timer RC_TIMER, which has an internal counter, issues the calculation trigger signal TRIG_CALC and capture trigger signal TRIG_CAPT respectively. Under this view, the internal timer RC_TIMER may be programmable to change the periodicity of the check of the parity. Moreover, the internal timer RCU_TIMER resets its counter on the COMP_CAPT trigger event (or on COMP_CALC trigger event). Thus basically the internal timer RC_TIMER after a reset, may start counting, and after a given number of clock cycles issues the calculation trigger signal TRIG_CALC, then after a second number of clock cycles (in particular sufficient for the completion by the parity calculators PAR _CALC₁...PAR_CALC_{N} to calculate the respective parity codes) sends the capture trigger signal TRIG_CAPT and resets its counter, starting to count the first given number clock of cycles again.

The RCU controller module RCC itself and its internal timer RCU_TIMER, i.e., its calculation register COMP_CALC and capture register COMP_CAPT, are configured by a control register RC_CTRL in the RCU controller module RCC. The RCU controller module RCC is configured to compare the new output, i.e. new captured parity code CPₓ, of each capture module CAPTₓ with the previous one if it is available. This can be done storing each new or current captured parity code CPₓ temporarily in a register of the RCU controller module RCC, for instance. In case the output, i.e., captured parity code CPₓ, of a capture module CAPTₓ is changed, a fault has affected the relevant register REGₓ and the RCU controller module RCC is configured to send an error signal ERR and to store the index x corresponding to the fault affected register REGₓ in an index register RCE_IDX. As result, on fault occurrence, signaled by the error signal ERR, the user, e.g. through the processing unit, may cancel the fault by, upon reading the index x of the faulting register in the index register RCE_IDX, by re-writing the relevant register, e.g., REGₓ, if it is a transient fault, or can detect if it is a permanent fault by performing a read-back of the register after, e.g. REGₓ, re-writing it.

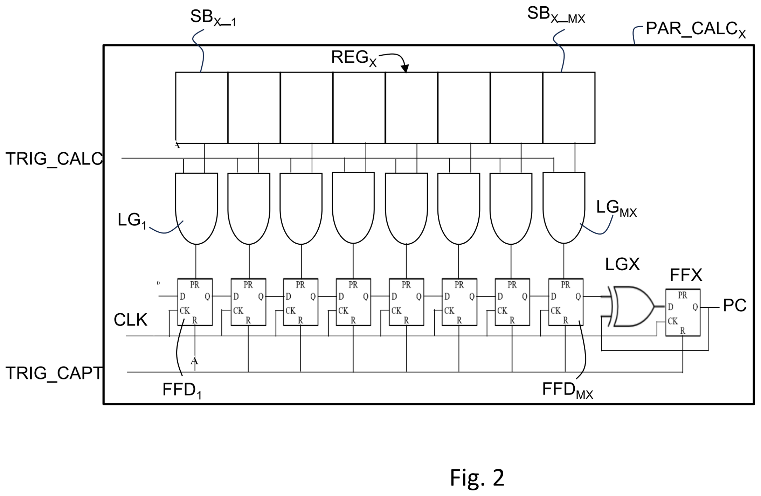

In figure 2 it is shown an embodiment of a parity calculator PAR_CALC_{X} by means of a PISO (Parallel Input Serial Output) Shift Register receiving the M_{X} bits, SB_{X_1} to SB_{X_MX}, of the register REGₓ in corresponding inputs of respective AND gates LG₁...LG_{MX} each receiving the calculation trigger signal TRIG_CALC as set signal. A shift register comprising a daisy chain, i.e. output of a device coupled to the input of the following device, of Mₓ D-flip flops, FFD₁...FFD_{MX}, receiving at their set input the output of a respective of the AND gates LG₁...LG_{MX}, as clock the clock CLK and as reset signal the calculation trigger signal TRIG_CALC, and the logic zero value at the input of the first D-flip flop FFD₁ in the chain.

At the output of the chain FFD₁...FFD_{MX} the output signal, i.e. output of the last flip-flop FFD_{MX}, is sent to a XOR gate LGX which receives also fed back as input the output of a output D-flip flop FFX coupled with the input to the output of the XOR gate LGX, i.e., while the chain FFD₁...FFD_{MX} output signal is different in logic value with respect to the output of the output D-flip flop FFX, the output signal of the output D-flip flop FFX is one, else is zero. This means that, since the binary string of Mₓ bits from the register REGₓ is made to advance serially to the XOR gate LGX, the XOR among the bits of the string of Mₓ bits from the register REGₓ is performed which result in a value which represents the parity code Pₓ of the of the string of Mₓ bits.

As mentioned, the capture trigger signal TRIG_CAPT is issued after the issuance of the calculation trigger signal TRIG _CALC, in particular with a delay sufficient for the completion by the parity calculators PAR _CALC₁...PAR_CALC_{N} to calculate the respective parity codes. By way of example, with reference to the PISO Shift register implementation of the parity calculator described with reference to figure 2, a delay greater than the number of clock periods necessary to compute the parity code, i.e., to complete the XOR operation advancing the last bit SB_{X_1} through the flip flop chain FFD₁...FFD_{MX} and FFX may be needed. Also, since the trigger signal TRIG_CALC is given to all the registers it may set on the maximum length of the shift registers i.e. the maximum length of a subset SBx a parity calculator PAR_CALₓ can process. This may correspond to the maximum length of the configuration registers REGₓ

By way of example, considering that the calculation trigger signal TRIG_CALC resets the counter RC_TIMER and defining a maximum value M_{MAX} as the maximum among the numbers of bits M₁...M_{N}, the results, i.e., parity codes P₁...P_{N} are ready after M_{MAX} clock cycles, so the capture trigger signal TRIG_CAPT can occur K clock cycles after the occurrence of the calculation trigger signal TRIG _CALC, where K >= M_{MAX} + 1 and the next calculation trigger signal TRIG_CALC can occur Y clock cycles after the occurrence of the previous calculation trigger signal TRIG_CALC where Y > K. It is underlined that, if the parity calculator unit PAR_CALCₓ comprises a PISO (Parallel Input Serial Output) Shift Register to serialize the subset of bits SB_{X}, further shift steps of each PISO Shift Register in move always a zero value so the output parity code Pₓ does not change any more. The same happens for the parity calculator PAR_CALₓ having in input a number of bits Mₓ < M_{MAX}.

Then, thus, the parity calculator unit PAR_CALC_{X} may comprise a PISO Shift Register, LG₁...LG_{MX}, FFD₁...FFD_{MX}, configured to serialize said subset of bits SB_{X} and a circuit, XOR gate LGX and flip flop FFX which feds back the output to the XOR gate, to calculate the XOR of said subset of bits SB_{X} serialized, in particular by the PISO Shift register.

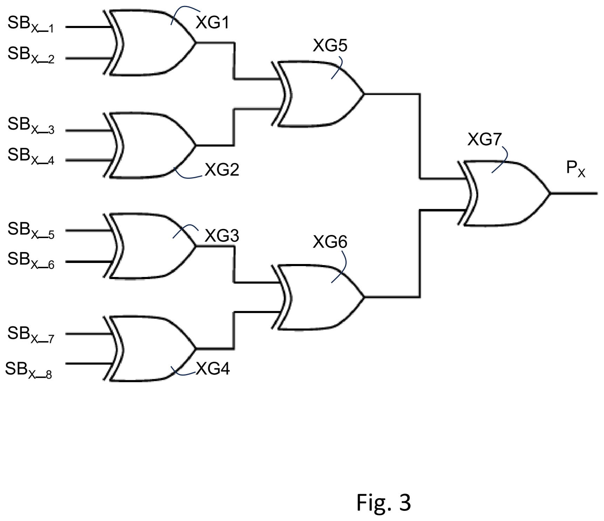

In variant embodiments, instead of a PISO Shift Register, the parity calculator unit PAR_CALC_{X} may be obtained by a combinatory logic circuit, as shown in the diagram of figure 3, which comprises for instance Mₓ-1 XOR gates for Mₓ bit of the input signal and with a minimum number of levels equal to k, where k is the minimum number which makes 2^{k}>=Mₓ. In the example Mₓ=8, thus k=3 and there is a first level comprises Mₓ/2 XOR gates, i.e. 4 gates XG1, XG2, XG3, XG4, XORing each pair of bits of the input string SB_{X_1} to SB_{X_8}, the second level contains Mₓ/4 XORing, 2 gates XG5, XG6, receiving as input pairs of the outputs of the XOR gate of the first level XG1, XG2, XG3, XG4, and finally so there is a level with only one XOR gate, XG7, imputing the pair of outputs of the gates XG5, XG6, which outputs the parity value Pₓ. Each XOR gate can be obtained with two NOT gates, two AND gates and one OR and three levels.

In this case the parity calculator unit operates as a hold circuit, holding the calculated parity bit. In the case of the parity calculator obtained as a PISO Shift Register instead at the end of the process the output of the PISO PISO Shift Register no longer can change, since at the end of the calculation the PISO contains only logic zeroes and further clock cycles introduce only logic zeroes.

To this regard, in variant, the architecture may not comprise the capture units, i.e. the parity codes are supplied directly to the RCU controller module RCC since, as explained above, the output of each PISO Shift Register, after Mₓ clock cycles, where Mₓ is the number of bits for the register, does not change any more. In this case the capture trigger signal TRIG_CAPT, issued after start only the check.

Summarizing in embodiments the solution may be directed to a fault detection circuit, e.g., circuit 10, for checking configuration registers, e.g., REG₁...REG_{N}, of a processing unit, performing a configuration register test on a given set of registers, e.g.,REG₁...REG_{N}) of said processing unit, reading settings of the configuration registers, e.g., REG₁...REG_{N}) and comparing them with expected settings,
wherein said fault detection circuit, e.g., 10, comprises
a set of parity calculator units, e.g., PAR _CALC₁...PAR_CALC_{N}, for instance the combinatory logic circuit with levels of XOR gates in parallel described above, each parity calculator unit, e.g., PAR_CALC_{X}, configured to receive from at least a configuration register , e.g., REGₓ, in said given set of registers, e.g., REG₁...REG_{N}, at least a subset of bits , e.g., SB_{X}, of a set of bits stored in said at least configuration register, e.g., REGₓ, and configured to calculate a parity code , e.g., P_{X}, of said subset of bits, SB_{X}, which binary value indicates a parity of said subset of bits, e.g., SB_{X},
a controller module, e.g., RCC, configured to, for each parity calculation unit, e.g., PAR_CALC_{X},
issue a parity calculation control signal, e.g., TRIG_CALC enabling the calculation of the parity code, e.g., P_{X}) by the corresponding parity calculation unit, e.g., PAR_CALC_X, at a given time,
issue a capture control signal , e.g., TRIG_CAPT, to enable receive said parity code, e.g., PC_{X} and compare it with a parity code, e.g., PC_{X}, received at a previous time - i.e. the capture control signal may enable receive the calculated parity code at the controller module, or hold in the capture unit or hold it on its output as captured parity code for the controller RCC to receive, i.e. read,
signal, e.g., signal ERR, a fault if the comparison indicates a change in the value of the captured parity code, e.g., PC_{X}, storing an index, e.g., X identifying the register, e.g., REGₓ, which comparison indicates a change in the value of the captured parity code, e.g., PCx.

In this case the parity calculator may be embodied by the combinatory logic, e.g. with n-1 XOR gates, described above, although the PISO or other parity calculation circuits can be used.

Then, in particular, the solution here described refers to a fault detection circuit, e.g., 10, for checking configuration registers, e.g., REG₁...REG_{N}, of a processing unit, performing a configuration register test on a given set of registers, e.g., REG₁...REG_{N}, of said processing unit, reading settings of the configuration registers, e.g., REG₁...REG_{N}, and comparing them with expected settings,
wherein said fault detection circuit, e.g., 10, comprises
a set of parity calculator units, e.g., PAR _CALC₁...PAR_CALC_{N}, each parity calculator unit, e.g., PAR_CALC_{X}, e.g., a PISO, configured to receive from at least a configuration register, e.g., REGₓ, in said given set of registers, e.g., REG₁...REG_{N}, at least a subset of bits, e.g., SB_{X}, of a set of bits stored in said at least configuration register, e.g., REGₓ, and configured to calculate a parity code, e.g., P_{X}, of said subset of bits, e.g., SB_{X}, which binary value indicates a parity of said subset of bits, e.g., SB_{X},
a set of capture units, e.g., CAPT₁...CAPT_{N}, each configured to receive a parity code, e.g., P_{X}, output from a respective parity calculator unit, e.g., PAR_CALC_{X}, in said set of parity calculator units, e.g., PAR_CALC₁...PAR_CALC_{N}, and to hold it on its output as captured parity code, e.g., PC_{X}, under the control of a capture control signal, e.g., TRIG_CAPT,
a controller module, e.g., RCC, configured to, for each parity calculation unit, e.g., PAR_CALC_{X}, and respective capture unit, e.g., CAPT_{X},
issue a parity calculation control signal, e.g., TRIG_CALC, enabling the calculation of the parity code, e.g., P_{X}, by the corresponding parity calculation unit, e.g., PAR_CALC_X, at a given time,
issue said capture control signal, e.g., TRIG_CAPT, to enable holding of the parity code value, e.g., P_{X}, as captured parity code, e.g., PC_{X},
receive said captured parity code, e.g., PC_{X}, and compare it with a captured parity code, e.g., PC_{X}, received at a previous time and
signal, e.g., ERR, a fault if the comparison indicates a change in the value of the captured parity code, e.g., PC_{X}, storing an index, e.g., X, identifying the register, e.g., REGₓ, which comparison indicates a change in the value of the captured parity code, e.g., PCx.

As said, subset of bits is a set of safety relevant bits, and, in particular, said configuration register test is a configuration register test according to ISO26262, i.e., the error signal can be used within said test.

The parity calculator unit, e.g., PAR_CALC_{X}, may receive subsets, e.g., SB_{X}, of bits from more than one configuration register, e.g., REG_{X}.

Then, the parity calculator unit, e.g., PAR_CALC_{X}, may comprise a PISO (Parallel Input Serial Output) Shift Register, e.g., LG₁...LG_{MX}, FFD₁...FFD_{MX}, configured to serialize said subset of bits, e.g., SB_{X}, and a circuit, e.g., LGX, FFX, to calculate the XOR of said subset of bits, e.g., SB_{X}, serialized.

The controller, e.g., RCC, is then configured to issue said capture control signal, e.g., TRIG_CAPT, upon completion of said calculation of a parity code, e.g., P_{X}, by all said parity calculator units, e.g., PAR_CALC₁...PAR_CALC_{N}, said controller comprising in particular a timer, e.g., RC_TIME, to issue said parity calculation control signal, e.g., TRIG_CALC, and capture control signal, e.g., TRIG_CAPT, in particular programmable , e.g., COMP_CALC, COMP_CAPT, in particular the parity calculator unit, e.g., PAR_CALCₓ being configured to be reset by the parity calculation control signal, e.g., TRIG_CALC) when it is asserted and then to start computing the parity code, e.g., P_{X}.

The fault detection circuit may be comprised in an electronic architecture comprising the processing unit and configured to operate the processing unit on the basis of the fault indication, provided by the fault detection circuit, e.g. for instance re-writing the relevant register indicated as containing the fault, if it is a transient fault, or detecting if it is a permanent fault by performing a read-back of the register after, re-writing it.

From the description here above thus the advantages of the solution described are clear.

Advantageously, the solution described a high diagnostic coverage (e.g., 99%) against single-point faults (transient or permanent) as requested by the ISO26262 standard because each parity code is calculated in a few clock cycles by reading the relevant register. Single-point faults affecting the RCU are latent faults. Based on the RCU architecture and assuming that RCU registers are triple voted, the architecture automatically clears all the transient faults and detects 50% of the permanent faults. Since the transient faults rate is typically three orders of magnitude higher than the permanent faults rate, the proposed system has a high diagnostic coverage (e.g., 90%) also against latent faults (transient or permanent) as requested by the ISO26262.

Moreover, the identification of the fault-affected register allows an easy implementation for fault-tolerant systems.

Finally, the proposed system needs about 50% less of the hardware overhead for triple-voted implementation.

Without prejudice to the underlying principles, the details and embodiments may vary, even significantly, with respect to what has been described by way of example only, without departing from the extent of protection.

The extent of protection is defined by the annexed claims.

## Claims

1. A fault detection circuit (10) for checking configuration registers (REG₁...REG_{N}) of a processing unit, performing a configuration register test on a given set of registers (REG₁...REG_{N}) of said processing unit, reading settings of the configuration registers (REG₁...REG_{N}) and comparing them with expected settings,
wherein said fault detection circuit (10) comprises
a set of parity calculator units (PAR _CALC₁...PAR_CALC_{N}), each parity calculator unit (PAR_CALC_{X}) configured to receive from at least a configuration register (REG_{X}) in said given set of registers (REG₁...REG_{N}) at least a subset of bits (SB_{X}) of a set of bits stored in said at least configuration register (REG_{X}) and configured to calculate a parity code (P_{X}) of said subset of bits (SB_{X}) which binary value indicates a parity of said subset of bits (SB_{X}),
a controller module (RCC) configured to, for each parity calculation unit (PAR_CALC_{X})
issue a parity calculation control signal (TRIG _CALC) enabling the calculation of the parity code (P_{X}) by the corresponding parity calculation unit (PAR_CALC_X) at a given time,
issue a capture control signal (TRIG_CAPT) to enable
receive said parity code (PC_{X}) and compare it with a parity code (PC_{X}) received at a previous time and
signal (ERR) a fault if the comparison indicates a change in the value of the parity code (PC_{X}), storing an index (X) identifying the register (REG_{X}) which comparison indicates a change in the value of the captured parity code (PC_{X}).

2. A fault detection circuit (10) for checking configuration registers (REG₁...REG_{N}) of a processing unit, performing a configuration register test on a given set of registers (REG₁...REG_{N}) of said processing unit, reading settings of the configuration registers (REG₁...REG_{N}) and comparing them with expected settings,
wherein said fault detection circuit (10) comprises
a set of parity calculator units (PAR _CALC₁...PAR_CALC_{N}), each parity calculator unit (PAR_CALC_{X}) configured to receive from at least a configuration register (REG_{X}) in said given set of registers (REG₁...REG_{N}) at least a subset of bits (SB_{X}) of a set of bits stored in said at least configuration register (REG_{X}) and configured to calculate a parity code (P_{X}) of said subset of bits (SB_{X}) which binary value indicates a parity of said subset of bits (SB_{X}),
a set of capture units (CAPT₁...CAPT_{N}) each configured to receive a parity code (P_{X}) output from a respective parity calculator unit (PAR_CALC_{X}) in said set of parity calculator units (PAR_CALC₁...PAR_CALC_{N}) and to hold it on its output as captured parity code (PC_{X}) under the control of a capture control signal (TRIG_CAPT).
a controller module (RCC) configured to, for each parity calculation unit (PAR_CALC_{X}) and respective capture unit (CAPT_{X}),
issue a parity calculation control signal (TRIG _CALC) enabling the calculation of the parity code (P_{X}) by the corresponding parity calculation unit (PAR_CALC_X) at a given time,
issue said capture control signal (TRIG_CAPT) to enable holding of the parity code value (P_{X}) as captured parity code (PC_{X}),
receive said captured parity code (PC_{X}) and compare it with a captured parity code (PC_{X}) received at a previous time and
signal (ERR) a fault if the comparison indicates a change in the value of the captured parity code (PC_{X}), storing an index (X) identifying the register (REG_{X}) which comparison indicates a change in the value of the captured parity code (PC_{X}).

3. A fault detection circuit (10) according to claim 1 or 2, wherein said subset of bits is a set of safety relevant bits.

4. A fault detection circuit (10) according to claim 1 or 2, wherein said configuration register test is a configuration register test according to ISO26262.

5. A fault detection circuit (10) to claim 1 or 2, wherein said parity calculator unit (PAR_CALC_{X}) receives subsets (SB_{X}) of bits from more than one configuration register (REG_{X}).

6. A fault detection circuit (10) according to claim 2, wherein, said parity calculator unit (PAR_CALCx) comprises a PISO (Parallel Input Serial Output) Shift Register (LG₁...LG_{MX}, FFD₁...FFD_{MX}) configured to serialize said subset of bits (SB_{X}) and a circuit (LGX, FFX) to calculate the XOR of said subset of bits (SB_{X}) serialized.

7. A fault detection circuit (10) according to claim 2, wherein said controller (RCC) is configured to issue said capture control signal (TRIG_CAPT) upon completion of said calculation of a parity code (P_{X}) by all said parity calculator units (PAR_CALC₁...PAR_CALC_{N}), said controller comprising in particular a timer (RC_TIME) to issue said parity calculation control signal (TRIG _CALC) and capture control signal (TRIG_CAPT), in particular programmable (COMP_CALC, COMP_CAPT).

8. A fault detection circuit (10) according to claim 2, wherein said parity calculator unit (PAR_CALC_{X}) is configured to be reset by the parity calculation control signal (TRIG _CALC) when it is asserted and then to start computing the parity code (P_{X}).

9. A fault detection circuit (10) according to claim 1, wherein, said parity calculator unit (PAR_CALC_{X}) comprises a combinatorial logic circuit calculating the XOR of pairs of bits of said subset of bits (SB_{X}).

10. A fault detection method comprising checking configuration registers (REG₁...REG_{N}) of a processing unit, performing a configuration register test on a given set of registers (REG₁...REG_{N}) of said processing unit, reading settings of the configuration registers (REG₁...REG_{N}) and comparing them with expected settings,
comprising performing a parity calculation (PAR_CALC₁...PAR_CALC_{N}), on at least a subset of bits (SB_{X}) of a set of bits stored in at least configuration register (REG_{X}) calculating a parity code (P_{X}) of said subset of bits (SB_{X}) which binary value indicates a parity of said subset of bits (SB_{X}),
for each parity calculation unit (PAR_CALC_{X}),
issuing a parity calculation control signal (TRIG _CALC) enabling the calculation of the parity code (P_{X}) by the corresponding parity calculation unit (PAR_CALC_X) at a given time,
issuing a capture control signal (TRIG_CAPT) to enable receiving the parity code value (P_{X}) and compare it with a parity code (PC_{X}) received at a previous time and
signalling (ERR) a fault if the comparison indicates a change in the value of the parity code (PC_{X}), storing an index (X) identifying the register (REG_{X}) which comparison indicates a change in the value of the captured parity code (PC_{X}).

11. A fault detection method according to claim 10,
comprising performing a parity calculation (PAR _CALC₁...PAR_CALC_{N}), on at least a subset of bits (SB_{X}) of a set of bits stored in at least configuration register (REG_{X}) calculating a parity code (P_{X}) of said subset of bits (SB_{X}) which binary value indicates a parity of said subset of bits (SB_{X}),
holding said parity code (P_{X}) (CAPT₁...CAPT_{N}) as captured parity code (PC_{X}) under the control of a capture control signal (TRIG_CAPT).
for each parity calculation unit (PAR_CALC_{X}) and respective capture unit (CAPT_{X}),
issuing a parity calculation control signal (TRIG _CALC) enabling the calculation of the parity code (P_{X}) by the corresponding parity calculation unit (PAR_CALC_X) at a given time,
issuing said capture control signal (TRIG_CAPT) to enable holding of the parity code value (P_{X}) as captured parity code (PC_{X}),
receiving said captured parity code (PC_{X}) and compare it with a captured parity code (PC_{X}) received at a previous time and
signalling (ERR) a fault if the comparison indicates a change in the value of the captured parity code (PC_{X}), storing an index (X) identifying the register (REG_{X}) which comparison indicates a change in the value of the captured parity code (PC_{X}).

12. A method according to claim 11, comprising
issue said capture control signal (TRIG_CAPT) upon completion of said calculation of a parity code (P_{X}) by all said parity calculator units (PAR_CALC₁...PAR_CALC_{N}), said controller comprising in particular a timer (RC_TIME) to issue said parity calculation control signal (TRIG _CALC) and capture control signal (TRIG_CAPT), in particular programmable (COMP_CALC, COMP_CAPT) .

13. A method according to claim 11, comprising resetting said parity calculator unit (PAR _CALC_{X}) by the parity calculation control signal (TRIG_CALC) when it is asserted and then start computing the parity code (P_{X}).
